# EUROPEAN PATENT SPECIFICATION

(11) **EP 0 345 029 B1**
(45) Date of publication and mention of the grant of the patent: **12.10.1994**
(21) Application number: 89305458.5
(22) Date of filing: 31.05.1989
(51) Int. Cl.: G02F 1/133, H01H 13/70

(54) **A switch incorporating NCAP liquid crystal**
Schalter mit einem "NCAP" Flüssigkristall
Interrupteur incorporant un cristal liquide "NCAP"

(30) Priority: 01.06.1988 US 200796; 04.04.1989 US 333618
(43) Date of publication of application: 06.12.1989
(73) Proprietor: RAYCHEM CORPORATION, Menlo Park California 94025 (US)
(72) Inventor: Wiley, Richard, Los Altos California 94022 (US); Salisbury, Paul C., Milpitas California 95035 (US); Fergason, John D., Atherton California 94025 (US); Yung, Abraham K., Saratoga California 97070 (US)
(74) Representative: Cross, Rupert Edward Blount

(56) References cited:
- EP-A- 0 165 063
- PATENT ABSTRACTS OF JAPAN, vol. 7, no. 26 (P-172)[1171], 2nd February 1983;& JP-A-57 178 220

## Description

The present invention relates generally to liquid crystals, and more particularly to a switch incorporating nematic curvilinear aligned phase ("NCAP") liquid crystals.

Liquid crystals are used in a wide variety of devices, including visual display devices. The property of liquid crystals that enables them to be used, for example, in visual displays, is the ability of liquid crystals to transmit light on one hand, and to scatter light and/or to absorb it (especially when combined with an appropriate dye), on the other, depending on whether the liquid crystals are in a relatively free, that is de-energized or field-off state, or in a strictly aligned, that is energized or field-on state. An electric field selectively applied across the liquid crystals can be used to switch between the field-off and field-on states.

There are three categories of liquid crystal materials, namely, cholesteric, nematic and smectic. The present invention relates in the preferred embodiment described hereinafter to the use of liquid crystal material which is operationally nematic. By "operationally nematic" is meant that, in the absence of external fields, structural distortion of the liquid crystal is dominated by the orientation of the liquid crystal at its boundaries rather than by bulk effects, such as very strong twists (as in cholesteric material) or layering (as in smectic material). Thus, for example, a liquid crystal material including chiral ingredients which induce a tendency to twist but which cannot overcome the effects of the boundary alignment of the liquid crystal material would be considered to be operationally nematic.

A more detailed explanation of operationally nematic liquid crystal material is provided in U.S. Patent 4,618,903. Reference may also be made to U.S. Patent No. 4,435,047.

NCAP liquid crystals and a method of making the same and devices using NCAP liquid crystals are described in detail in the above-identified U.S. Patent No. 4,435,047. A NCAP liquid crystal apparatus is an apparatus formed of NCAP liquid crystal material that is capable of providing a function of the type typically inuring to a liquid crystal material. For example, such a NCAP liquid crystal apparatus may be a visual display device that responds to the application and removal of an electric field to effect a selected attenuation of visible light.

Such NCAP liquid crystal apparatus may commonly include a NCAP liquid crystal material positioned between two electrodes wherein the electrodes may be located on respective flexible substrates. Such apparatus may be used in electronic devices that include a keyboard or push buttons or an array of push buttons, or other types of electrical switches and contacts used to control and/or input information into an electronic device.

Such an electronic device may include any number of function keys such as OFF and ON, START and STOP, TEST and NO-TEST, etc. It will be appreciated that as the complexity of an electronic device increases, the number of functions which the device can accomplish, and hence the number of function keys or push buttons, also increases. Due to space limitations and for other considerations, it would be advantageous to limit the number of function keys and associated displays for a particular electronic device. One way of doing this is to integrate a function key into an apparatus which displays the function.

The NCAP liquid crystal is particularly suitable for use as part of a switch or function key for inputting and displaying information. A membrane-type switch may be integrated with an NCAP liquid crystal display apparatus wherein information is displayed by the NCAP apparatus with such display being visible through the front of the switch. Depression of a flexible substrate of the NCAP apparatus by application of a pressure thereto, as might be applied by an operator, can input information and causes a change in the display. The quality of the display of the present invention is not adversely affected by application of a pressure to the substrate. In fact, the high quality of the display of the present invention is unchanged by the application of such a pressure.

With prior art liquid crystal display devices not utilizing NCAP liquid crystal, it was not possible to build a truly effective display apparatus that includes a membrane-type switch for inputting or receiving information. The reason for this is that depression of a flexible faceplate of such a switch, beneath which may be located a liquid crystal material, would cause a flow of the liquid crystal material away from the location at which pressure is applied, adversely affecting the quality of the display.

Particularly, such a flow of liquid crystal produces a change in the electrical and optical properties of the liquid crystal, for example, a change in polarization and the occurrence of birefringence, which adversely affects the appearance of the display. For instance, the application of a pressure to a prior art liquid crystal display device utilizing a twisted nematic-type liquid crystal material would cause such material to lose its 90° twist, producing a detrimental optical effect and thereby degrading the quality of the display. Additionally, when such pressure is removed, the liquid crystal material flows back to its original position, producing another detrimental optical effect.

Unlike prior art liquid crystal displays (those not utilizing NCAP liquid crystal), the NCAP liquid crystal which forms a part of the switch apparatus of the present invention is insensitive to pressure.

Thus, there is no detrimental effect to the display of such an apparatus upon the application of pressure thereto. Particularly, by providing for confinement of discrete quantities of liquid crystal material, for example, in capsules, permits each individual capsule or capsule-like volume to in effect operate as an independent liquid crystal device with the result that the display effected by the switch apparatus of the present invention is not pressure sensitive. That is to say, the encapsulated liquid crystal material will not flow away from the point at which pressure is applied to any significant extent to adversely affect the quality of the display. Or it may be said that the NCAP liquid crystal is substantially incompressible relative to the flexibility of a flexible substrate that supports it.

EP-A-0165063 discloses a switch comprising a first flexible substrate positioned at a viewing side of said switch, said first flexible substrate having a first electrode formed thereon and having sufficient flexibility to deflect in response to the application of a pressure thereto wherein a display is visible through said first substrate; a liquid crystal means including the combination of a liquid crystal material and containment means for inducing a distorted alignment of said liquid cyrstal material which in response to such alignment at least one of scatters and absorbs light and which in response to an electric field reduces the amount of such scattering or absorption; a second flexible substrate positioned rearwardly of said first substrate, having a second electrode formed thereon, and having sufficient flexibility to deflect in response to the application of said pressure, said liquid crystal means being disposed between said first and second substrates; a third substrate disposed rearwardly of said second substrate and having a first conductor formed thereon, said third substrate forming part of a switch and including a flexible portion for actuating a switch function in response to the application of said pressure; a substantially rigid substrate forming part of said switch and disposed rearwardly of said third substrate and spaced therefrom, said rigid substrate having a second conductor formed thereon; at least a portion of said first, second and third substrates deflectable toward said rigid substrate in response to the application of said pressure so as to actuate said switch function and cause a change in said display; said liquid crystal means being arranged such that at least a portion of said pressure is applied to said liquid crystal means being substantially unaffected by the application of said pressure in that it retains its ability to induce said distorted alignment and to reduce the amount of such scattering or absorption during application of said pressure.

The present invention is characterised by a means forming a barrier for preventing moisture from contaminating the liquid crystal means through the second substrate.

The prescribed input is preferably of the electro-magnetic type and, more particularly, an electric field. A pair of electrodes are provided to apply the electric field. The electrodes are located on opposite sides of the combination of the liquid crystal material and the containment means. The electrodes are supported on first and second flexible substrates. The substrates supporting the electrodes have sufficient flexibility to deflect in response to the application of a pressure.

A third substrate is disposed rearwardly of the second substrate and has a conductor formed thereon. The third substrate forms part of a switch and includes a flexible portion for actuating a switch function in response to the application of the pressure. A reflector means is formed on the side of the third substrate remote from the conductor. An air gap is formed between the reflector means and the electrode on the second substrate.

A substantially rigid substrate is disposed behind the third substrate. At least a portion of the first, second and third substrates deflect toward the rigid substrate in response to the application of the pressure so as to actuate the switch function and cause a change in the display. The display may change at the point of application of the pressure by causing an electrical input to be provided to the liquid crystal means. At least a portion of that pressure is applied to the liquid crystal means during deflection. The liquid crystal means is substantially unaffected by the application of the pressure in that it retains its ability to induce the distorted alignment and to reduce the amount of scattering or absorption during application of the pressure.

The barrier may be disposed between the reflector means and the second electrode for preventing moisture and/or oxygen from contaminating the liquid crystal means. The switch may also include means for reducing the amount of ultraviolet radiation passing through the first substrate.

The switch can also include an electroluminescent panel. The panel forms a backlighting source and carries an electrical conductor for switch operation.

The switch may further include appropriate means, such as domes disposed between the substrates of the membrane switch portion, for providing a tactile feel to an operator of the switch.

The present invention will be described in more detail hereinafter in conjunction with the drawings wherein:
Figures 1-2 schematically illustrate a display that may be created with a switch in accordance with the present invention;
Figures 3-5 are schematic, cross-sectional views illustrating switches in accordance with the present invention; and
Figure 6 is a schematic, cross-sectional view illustrating a switch in accordance with the present invention including means for providing a tactile feel.

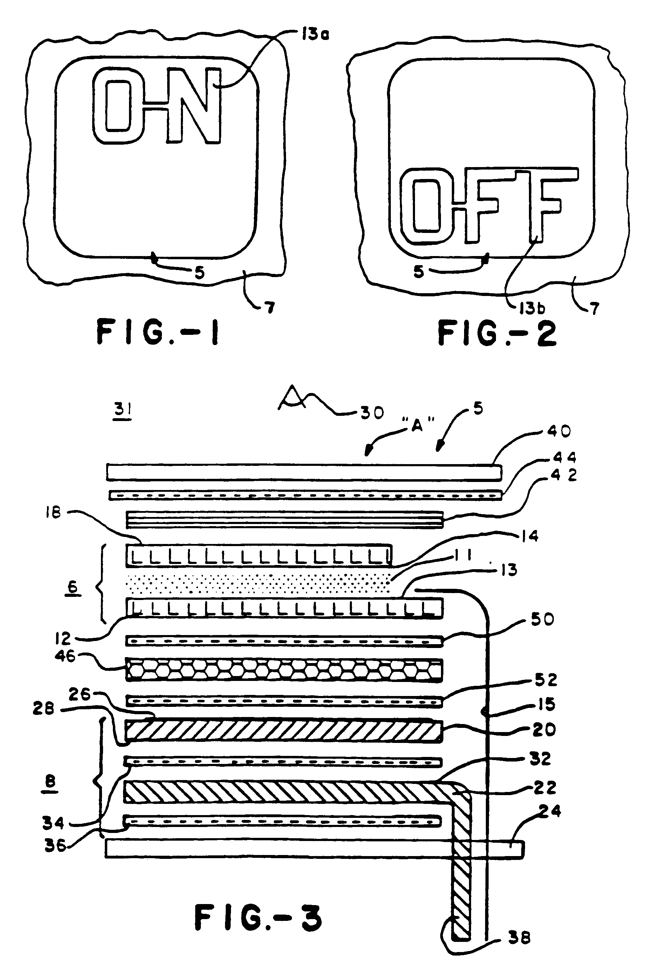

Referring now to the drawings, in which like components are designated by like reference numerals throughout the various figures, attention is first directed to Figures 1 and 2. Figures 1 and 2 show a switch 5 that is adapted to control some function such as an on/off function of an electrical or electronic device 7. It should be apparent that the present invention may be used to control and display almost any function of a device, such as START/STOP, HIGH/LOW, FORWARD/REVERSE, etc. Additionally, it should be apparent that the present invention may be utilized with many different types of devices, for example, calculating equipment, communication equipment, household appliances such as microwave ovens and washing machines, computer-aided design equipment, and computer-aided manufacturing equipment.

Figure 1 depicts the device in the on mode wherein the word "ON" is displayed. Figure 2 shows the device in the off mode with the word "OFF" displayed.

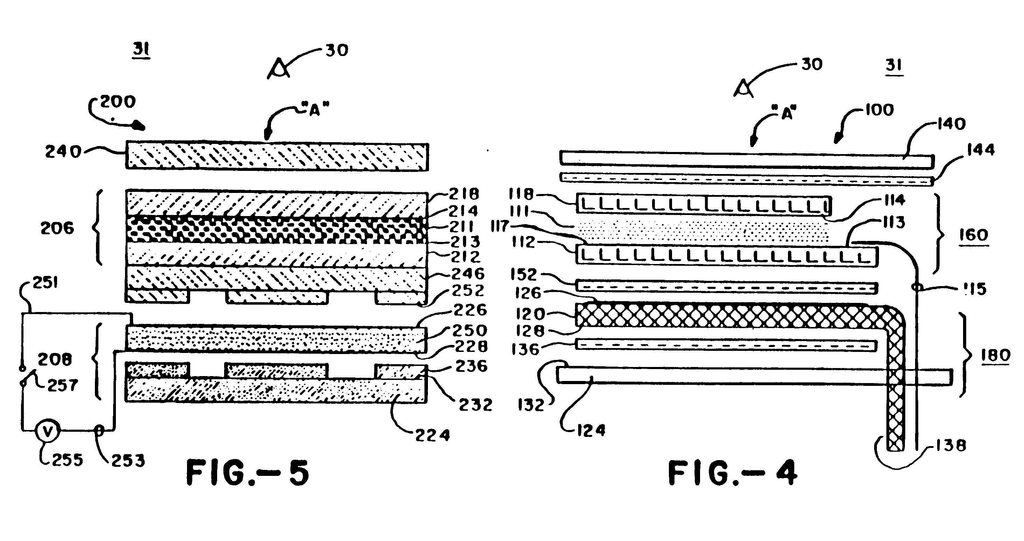

As shown in Figure 3, switch 5 includes an NCAP liquid crystal cell 6 and a membrane-type switch portion 8. The switch 8 includes flexible substrates 20 and 22 having appropriate conductors formed thereon. A substantially rigid substrate 24 is located behind substrate 22. The NCAP cell includes a NCAP liquid crystal material 11 supported on a flexible substrate 12 having an electrode 13 located thereon. The cell further comprises a second electrode 14 mounted on second flexible substrate 18. The cell and the switch may each be about 0.381mm (.015 inches) thick.

Substrates 12, 18 and 20 are adapted to deflect or be deformed toward the rear of the switch, i.e. toward rigid substrate 24, when a pressure is applied thereto, as schematically illustrated by arrow "A". As will be discussed, substrates 12, 18, 20, and 22 may be polymeric films having sufficient flexibility to deflect under a pressure as might be applied by an operator of a typical keyboard. Preferably, these substrates are thin polyester films.

The NCAP liquid crystal material 11 may include a containment medium containing plural volumes of operationally nematic liquid crystal. The liquid crystal preferably contains a pleochroic dye to absorb light in the field-off state. The plural volumes may be discrete or interconnecting cavities or capsules. The interconnecting channels or passageways may also contain liquid crystal material. This structure is described in more detail in U.S. Patent 4,707,080.

Whether such interconnecting passages exist does not affect the performance of a switch constructed in accordance with one embodiment of the present invention. That is, even if the interconnecting passages are present, the NCAP liquid crystal material is still insensitive to the application of a pressure applied thereto during actuation of the switch.

In the embodiment illustrated, electrode 13 comprises two electrically isolated patterns of conductors 13a and 13b (see Figures 1 and 2), each of which may be selectively energized. Conductor 13a may be configured to display the word "ON" when it is energized, and conductor 13b the word "OFF" when it is in an energized state. Electrode 14 is the common electrode and preferably has a rectangular shape that approximates the outline of the pattern of electrode 13.

Of course, it should be understood that electrode 13 may comprise some other pattern of conductors, for example, electrode 13 may comprise a plurality of 5 x 7 dot matrix characters wherein individual conductive segments of the matrix may be selectively energized, as is known in the art, to display either the words "ON" or "OFF". For that matter, such a dot matrix arrangement may be driven to display any other alpha or numeric display desired, including a display of more than two functions or a display of other information. The display may also comprise some form of graphics or a color that is visible or not depending upon whether an electric field is applied across electrodes 13 and 14.

Flexible substrates 12, 18 and electrodes 13, 14 are optically transmissive so that the NCAP cell is capable of controlling the transmission of light therethrough in response to an electric field applied across electrodes 13 and 14.

A plurality of NCAP liquid crystals arranged in one or more layers may be applied to substrate 12 in a manner such that the NCAP liquid crystals adhere to electrode 13 and substrate 12. Substrate 12 may be a flexible polyester film that has been precoated with a less than 100 ohms per square layer of indium tin oxide (ITO). Substance 12 may be about 0.1778mm (7 mils) thick.

A layer of electrically conductive material, such as nickel (NI), may be deposited on top of the layer of ITO. The two layers may then be subjected to an etching operation so that the ITO layer forms, for example, electrode segments 13a and 13b, and the NI/ITO layer forms busses to power the conductive segments. The conductive segments are, obviously, in the viewing area of the display. The busses would be in a non-viewing area. A polyester film with a precoated NI/ITO layer may be obtained from Andus Corporation, Canoga Park, California. This film and an exemplary etching operation are described in detail in EP-A-0265110.

Substrate 18 may also be a flexible polyester film precoated with less than a 100 ohms per square layer of ITO to form electrode 14. This substrate may be about 0.1016mm (4 mils) thick. The film may also be purchased from Andus Corporation or Southwall Corporation of Palo Alto, California.

As noted, switch portion 8 includes substrates 20 and 22. Substrate 20 may have a reflector 26 formed on one side and a common electrode 28 formed on the other side. Reflector 26 may comprise a fluorescent paint of any desired color. The reflector layer may be applied to the surface of substrate 20 to have a thickness of about 0.0254mm (.001 inches). In the on-state. light transmitted by the liquid crystal cell 6 is reflected by reflector 26 and is visible to an observer 30, such as an individual operating the electronic device 7, or an observing instrument located in front of or on the viewing side 31 of the switch.

Substrate 22 has formed thereon a switch pattern electrode 32. As is well known in the art, electrode 32 may have any desired pattern for switch operation; for example, electrode 32 may have an interdigitated pattern. A layer of switch spacer adhesive 34, may be disposed between common electrode 28 and pattern electrode 32. This layer can comprise a polyester film having a suitable adhesive, such as 3M 467 available from 3M Corporation, St. Paul, Minnesota, located on both sides of the film. The layer may be about 0.127mm (.005 inches) thick. In the absence of a pressure applied to the switch, for example, by an operator, layer 34 separates, both physically and electrically, electrodes 28 and 32. Appropriate cutouts, however, are formed in layer 34 so that electrical contact can be made between conductors 28 and 32. Thus, when a suitable pressure is applied to the switch, electrode 28, which may be in the form of a dome, makes contact, through the openings in layer 34, across the fingers, for example, of the interdigitated pattern of electrode 32 to actuate the switch function. Membrane switches are described generally in U.S. Patent 4,683,360 .

Substrates 20 and 22 are also flexible and may be formed from a polyester film material such as Mylar®. Electrodes 28 and 32 may be any appropriate electrically conductive material, for example silver or carbon. The electrodes may be screen-printed or otherwise formed on their respective substrates.

Substrate 24 is substantially rigid and comprises a stiffener at the back of the switch. It may be formed from polycarbonate or a phenolic material having a thickness of about 0.762 to 2.54mm (30 to 100 mils).

As is known in the art, substrate 24 may also have, for example, a metallic tape, with an adhesive backing, disposed along the edges of the substrate. The tape is connected to a ground so that the substrate is electrically grounded to act as an electrostatic discharge (ESD) shield. The ESD shield protects the switch electronics from any electrostatic charge induced in the switch by its operation, for example by the application of a pressure thereto by an operator. Any such electrostatic charge is passed to ground rather than the switch electronics. A suitable adhesive 36, such as 3M 467, is utilized to join substrate 22 and rigid substrate 24.

Substrate 24 may also comprise a metallic substrate, for example aluminium. The metallic substrate provides a stiffener at the back of the switch, and if it is connected to ground, an ESD shield.

Switch 5 may further include a graphic overlay 40 located at the front face of the switch. The graphic overlay may be approximately 0.127mm (.005 inches) thick. It may form a template having appropriate shapes, contours, holes, and cutouts to frame the displays established by the switch. The graphic overlay may comprise a polycarbonate or polyester film having the graphics screen printed on the reverse side and an abrasion-resistant coating formed on the front side. Such a material is sold under the trade name Marnot II by Tekra, Inc. of Madison, Wisconsin. The graphic overlay may be any desired color, such as black, or it may be multi-colored. It will have appropriate openings formed therein through which the display, for example the words "ON" and "OFF", may be visible.

The switch may further include a layer 42 of ultraviolet (UV) light absorbing material. Layer 42 may be disposed between graphic overlay 40 and substrate 18, and be adhered to the graphic overlay by means of a suitable optical adhesive 44, such as Y97 21 from 3M or adhesive 2104 from MACTAC of Stow, Ohio. Both the optical adhesive and layer 42 are optically transmissive. Layer 42 may comprise a layer of acrylic, approximately 0.0508 to 0.0762mm (2 to 3 mils) thick, with UV inhibitors. Such material is available, for example, under the trade name Transflective Sheet/UV Filter (PUVF030), and may be purchased from Nitto of Tokyo, Japan. Layer 42 absorbs ultraviolet light that would otherwise cause yellowing of the liquid crystal material adversely effecting its optical performance.

Switch 5 may also include a moisture barrier 46 disposed between substrate 12 and reflector 26. The moisture barrier is optically transmissive and may comprise a layer of polyester coated with ITO. This material may be purchased from Andus or Southwall. The barrier is designed to prevent water from leaking into the liquid crystal cell and detrimentally effecting the liquid crystal material's optical and electrical properties. By way of explanation, during the etching process to form electrode 13, the electrode-coated layer on substrate 12 is etched down to the substrate. Since water may leak or bleed through substrate 12 in the regions where there is no electrode coating, barrier 46 is provided. An optical adhesive 50, like optical adhesive 42, may be utilized to join moisture barrier 46 and substrate 12. Barrier 46 can also prevent oxygen from leaking into and contaminating the liquid crystal material.

Switch 5 can also include a die-cut air gap adhesive layer 52 formed between moisture barrier 46 and reflector 26. This is a layer of adhesive material, such as 3M 467, that has cutouts or windows formed therein, such as by die cutting, that match the electrode pattern of electrode 13. Thus, an air gap or air space is formed between reflector 26 and the active regions of the NCAP liquid crystal cell 6, i.e. the electrode segments of electrode 13, for example, electrode segments 13a and 13b. The air gap or spacing between the reflector and the electrode 13 results in a brighter display and hence better contrast between the on and off states of the switch. The thickness of layer 52 may be about 0.0508mm (2 mils).

As is known, a voltage may be selectively applied to electrodes 13 and 14, and hence across liquid crystal material 11 of the NCAP liquid crystal cell, by means of a switching circuit (not shown). Circuits that accomplish this function and the functions of switching are conventional and well known to those skilled in the art, and thus they are not described here. As shown, appropriate electrical leads or connections 15 connect electrodes 13 and 14 to the appropriate circuitry. Similarly, an electrical lead or interconnection 38 connects switch electrodes 28 and 32 to appropriate circuitry for controlling the on and off functions, for example, of device 7.

By way of example, if device 7 is in the off mode, a voltage will be applied across common electrode 14 and electrode segment 13b, and hence across the NCAP liquid crystal material located therebetween, such that the molecules of the NCAP liquid crystal are in the desired alignment to permit the transmission of light to display the word "OFF", which will appear as the color of the reflector. Conversely, if no voltage is applied across electrode segment 13a, the liquid crystal material between segment 13a and electrode 14 is in the off state wherein the liquid crystal material and the dye scatter and/or absorb light to obscure the word "ON". Pressing the front of the switch 5 to turn device 7 on causes electrode 13a to be energized and electrode 13b to be deenergized such that the word "ON" is displayed, in the desired color, and the word "OFF" is obscured.

As discussed, switch 5 is operated by applying a pressure as shown at "A" to the front of the switch. This results in the application of a pressure to liquid crystal material 11 of NCAP cell 6 which is transmitted to membrane switch portion 8 to cause conductors 28 and 32 to make contact to actuate the switch function and change the display provided by NCAP cell 6. Of course, the switch layers between the front face of the switch and rear substrate 24 all should preferably be made of a flexible material.

Figure 4 illustrates an improved version of the switch of Figure 3. Specifically, switch 5 (Figure 3) includes 14 discrete layers (the reflector and its associated substrate are counted as one layer) while switch 100 (Figure 4) includes but 9 layers. Thus, it is simpler and more economical to manufacture.

Switch 100, like switch 5, includes a graphic overlay 140, and NCAP liquid crystal cell 160 and a membrane-type switch portion 180.

The NCAP liquid crystal cell includes an NCAP liquid crystal material 111 disposed between flexible substrates 112 and 118. A common electrode 114 is formed on substrate 118, and a patterned electrode 113 is formed on substrate 112. An appropriate electrical lead or leads 115 are provided for connecting the electrodes to suitable circuitry.

However, in switch 100, the UV blocking layer 42 has been eliminated. Instead, a UV blocking material has been incorporated into substrate 118. As in switch 5, the UV blocking material absorbs ultraviolet radiation.

Substrate 118 may be formed from a polyester film coated with ITO to form electrode 114. A UV inhibitor material, however, has been added to the polyester film to absorb UV light. Such a substrate is available from Toray, Tokyo, Japan, and is known by the name Q-37. This substrate comprises a polyester film that has incorporated therein UV inhibitor, such as 2-hydroxy-4-n-octyloxybenzophenone that perform the ultraviolet radiation blocking function.

The moisture and/or oxygen barrier layer 46 has also been eliminated from switch 100. Such a barrier, however, has been provided as part of substrate 112. Specifically, substrate 112 comprises a layer of flexible polyester film coated with a transparent nonconductive material, such as tin oxide, that forms a barrier to moisture and/or oxygen. A layer of a transparent conductive material, such as ITO, is deposited on top of the nonconductive layer to form the electrodes. This material is available from Andus Corporation. As discussed, a coating of an electrically conductive material, such as NI, may be deposited on top of the ITO to form a buss for powering the electrodes.

An optical adhesive 144 joins graphic overlay 140 to substrate 118. A die-cut air gap adhesive 152, like that utilized in switch 5, is disposed between substrate 112 and reflector 126 on substrate 120 of switch portion 180.

The construction of switch portion 180 has also been simplified. It comprises only flexible substrate 120 and a substantially rigid substrate 124 between which is disposed a switch spacer adhesive 136, like that used in switch 5. As discussed, substrate 120 may be a thin, polyester film, and substrate 124 can be formed from a polycarbonate, phenolic or metallic material.

Substrate 124 forms an ESD shield and provides a stiffener at the rear of the switch. Common electrode 132 is formed on substrate 124, and a patterned electrode 128 is formed on flexible substrate 120. Electrodes 128 and 132 are connected to the switching circuitry by lead or leads 138.

Another embodiment of a switch is illustrated in Figure 5. Switch 200 includes a graphic overlay 240, a NCAP liquid crystal cell 206, and a membrane-type switch portion 208.

The NCAP cell comprises NCAP liquid crystal material 211 disposed between flexible substrates 212 and 218. A patterned electrode 213 is formed on substrate 212, and a common electrode 214 is formed on substrate 218.

A moisture barrier 246 may also be provided. The moisture barrier, as in switch 5, may comprise a layer of polyester coated with ITO.

Membrane switch portion 208 may include an electroluminescent (EL) panel 250 and a rear substrate 224. The rear panel or substrate 224 would be substantially rigid and EL panel 250 would be flexible to permit actuation of the switch by the application of a pressure as at "A" to the front of the switch.

A switch pattern electrode 228 may be formed on one surface of the EL panel, and a common electrode 232 would be formed on the opposed surface of substrate 224. As discussed, a switch spacer adhesive layer 236 is disposed between these two electrodes to separate them in the absence of the application of a pressure to the switch by an operator.

A reflector 226 is formed on the side of EL panel 250 remote from patterned electrode 228. A die-cut air gap adhesive layer 252 may be disposed between reflector 226 and moisture barrier 246. As in the other embodiments, the air gap adhesive layer 252 provides an air space between reflector 226 and the electrically-active regions of liquid crystal cell 206.

EL panels themselves are well known in the art, and thus they are not described in any detail. Generally, EL panel 250 is a thin, flat display panel that includes electroluminescent phosphors that emit light when excited by an electrical field. The display may typically comprise two electrode-coated substrates between which are located a layer or layers of a dielectric material, and a electroluminescent phosphorus material. EL panels are described in U.S. Patent 4,740,781. Examples of EL panels that may be utilized in switch 200 are those available from Luminescent systems, Inc. of Lebanon, New Hampshire. These panels are available in different sizes depending upon the application.

As noted above, electrical connections (not shown) are provided for connecting the liquid crystal cell electrodes and the switch electrodes to suitable circuitry. As is well known in the art, appropriate electrical connections, for example leads 251, 253, are made between the electrodes of EL panel 250 and a source of electrical energy 255 for operating the EL panel. A switch 257 determines whether an electric field is applied across panel 250. Preferably, the EL panel is driven by a 60 Hz, 60 volt source. This may be the same power source that drives the NCAP cell.

EL panel 250 acts as the upper substrate of membrane switch portion 208. Additionally, when an electric field is applied across it, it provides a source of backlighting. This provides switch 200 with improved optical operating characteristics when there is insufficient ambient light, for example in extremely dark rooms or at night. In this regard, reflector 226 acts as a reflector in bright light, for example daylight, and as a transflector under low-light conditions.

Switch 200 also may be modified by eliminating barrier 246, with EL panel 250 acting as the moisture and/or oxygen barrier.

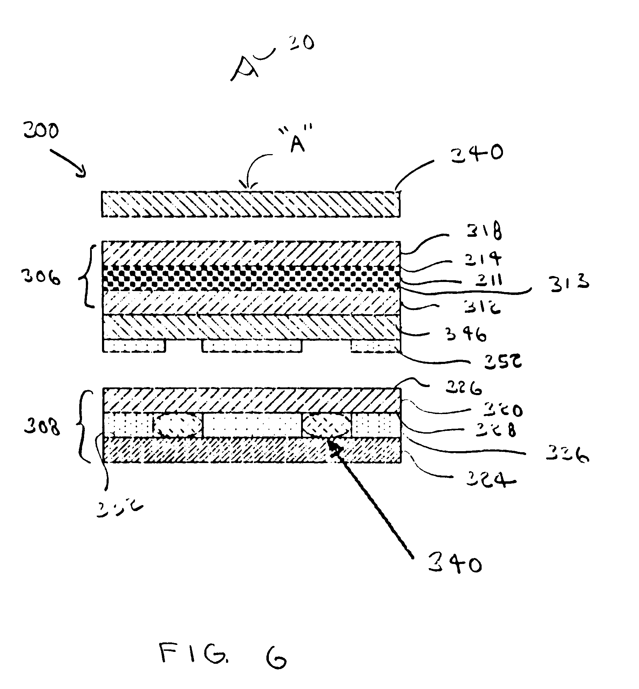

Yet another embodiment of a switch is illustrated in Figure 6. This switch 300 includes a graphic overlay 340, a NCAP liquid crystal cell 306, and a membrane-type switch portion 308.

The NCAP cell comprises NCAP liquid crystal material 311 disposed between flexible substrates 312 and 318. A patterned electrode 313 is formed on substrate 312, and a common electrode 314 is formed on substrate 318. A moisture or oxygen barrier 346 may be provided.

Membrane switch portion 308 may include a flexible substrate 320 and a substantially rigid substrate 324 between which is disposed a switch spacer adhesive 336 and a number of plastic or metal domes 340. (The use of a dome or domes in membrane switches is known.) Substrate 320 may be a thin, polyester film, and substrate 324 may be a polycarbonate, phenolic or metallic material.

A common electrode 328 may be formed on the surface of substrate 320, and a patterned electrode 332 may be formed on the opposed surface of substrate 324. The pattern may consist of interdigitated conductors.

A reflector 326 may be formed on the side of substrate 320 remote from electrode 328. A die-cut air gap adhesive layer 352 may be disposed between reflector 326 and barrier 346. As in the other embodiments, the air gap adhesive layer provides an air space between reflector 326 and the electrically-active regions of the liquid crystal cell 306.

As discussed, the switch spacer adhesive layer 336 is disposed between electrodes 328 and 332 of membrane switch 308 to separate them in the absence of the application of a pressure to the switch as might be applied by an operator.

Also as previously noted, a suitable dome or domes, made from a plastic or a metal material, for example, may be disposed between the substrates 320 and 324 of the membrane switch 308. The domes provide a tactile feel for the operator of a switch during the application of the pressure to the switch as represented at "A". By way of example, the domes may be about 0.127mm (5 mils) in thickness.

The dome embodiments may be utilized with the other switch embodiments disclosed in the specification. Alternatively, it would also be possible to form the domes, for example, by embossing them at the front portion of the switch; for example, on the overlay or between the overlay and the NCAP cell 306.

Although certain specific embodiments of the invention have been described herein in detail, the invention is not to be limited only to such embodiments, but rather only by the appended claims.

## Claims

1. A switch, comprising:
a first flexible substrate (18) positioned at a viewing side (31) of said switch, said first flexible substrate (18) having a first electrode (14) formed thereon and having sufficient flexibility to deflect in response to the application of a pressure thereto wherein a display is visible through said first substrate (18);
a liquid crystal means (11) including the combination of a liquid crystal material and containment means for inducing a distorted alignment of said liquid cyrstal material which in response to such alignment at least one of scatters and absorbs light and which in response to an electric field reduces the amount of such scattering or absorption;
a second flexible substrate (12) positioned rearwardly of said first substrate (18), having a second electrode (13) formed thereon, and having sufficient flexibility to deflect in response to the application of said pressure, said liquid crystal means (11) being disposed between said first and second substrates (18, 12);
a third substrate (20) disposed rearwardly of said second substrate (12) and having a first conductor (28) formed thereon, said third substrate (20) forming part of a switch (8) and including a flexible portion for actuating a switch function in response to the application of said pressure;
a substantially rigid substrate (24) forming part of said switch (8) and disposed rearwardly of said third substrate (20) and spaced therefrom, said rigid substrate (22) having a second conductor formed thereon;
at least a portion of said first, second and third substrates (18, 12, 20) deflectable toward said rigid substrate (24) in response to the application of said pressure so as to actuate said switch function and cause a change in said display;
said liquid crystal means (11) being arranged such that at least a portion of said pressure is applied to said liquid crystal means (11) being substantially unaffected by the application of said pressure in that it retains its ability to induce said distorted alignment and to reduce the amount of such scattering or absorption during application of said pressure;
characterised by means (46) forming a barrier for preventing moisture from contaminating said liquid crystal means (11) through the second substrate.

2. A switch as claimed in claim 1 characterised by a reflector means (26) formed on the side of said third substrate (20) remote from said conductor (28);
means (52) forming an air gap between said reflector means (26) and said second electrode (13).

3. A switch as claimed in Claim 2 characterised in that said second electrode (13) forms a pattern and said air gap means (52) comprises a member having cut-outs formed therein that approximate the configuration of said pattern.

4. A switch as claimed in Claim 2 characterised in that said barrier forming means (46) is disposed between said reflector means (26) and said second electrode (13).

5. A switch as claimed in Claim 1 or Claim 2 characterised in that said liquid crystal material includes a pleochroic dye.

6. A switch as claimed in Claim 2 characterised by means (42) for reducing the amount of ultraviolet light passing into said liquid crystal means (11).

7. A switch as claimed in Claim 1 or Claim 2 characterised by a graphic overlay (40) located on a front face of the switch.

8. A switch as claimed in Claim 1 or Claim 2 characterised by a fourth substrate (22) disposed between said third substrate (20) and said rigid sustrate (24), said fourth substrate (22) forming part of the switch (8) and having a second conductor (32) formed thereon for making electrical contact with said first conductor (28) during the application of said pressure.

9. A switch as claimed in Claim 8 characterised by a means (34) disposed between said first and second conductors for maintaining a spacing therebetween in the absence of said pressure.

10. A switch as claimed in Claim 8 characterised in that said rigid substrate (24) acts as an electrostatic discharge shield.

11. A switch as claimed in Claim 1 or Claim 2 characterised in that transparent conductive material is applied to said second substrate (12) to form said second electrode (13) and a metal is applied to said conductive material to form at least one bus.

12. A switch as claimed in Claim 1 characterised by an electroluminescent panel (250) for providing a source of backlighting for said display wherein said electroluminescent panel (250) is deflectable for actuating a switch function.

13. A switch as claimed in Claim 12 charactrised by a substantially rigid substrate (224) formed rearwardly of said electroluminescent panel (250) and spaced therefrom, said electroluminescent panel (25) having a first conductor (228) formed on the side thereof nearest said rigid substrate (224) and said rigid substrate (224) having a second conductor (232) formed thereon.

14. A switch as claimed in Claim 13 characterised by means (236) disposed between said first and second conductors for maintaining a spacing therebetween in the absence of said pressure.

15. A switch as claimed in Claim 14 characterised by a reflector means (226) formed on the side of said electroluminescent panel (25) remote from said first conductor (228) and means (252) for forming an air gap between said reflector means (226) and said display means (206).

16. A switch as claimed in Claim 1, Claim 2 or Claim 12 characterised by means for supplying a tactile feel during deflection of said substrates.

## Patentansprüche

1. Schalter, umfassend:
ein erstes flexibles Substrat (18), das auf der Sichtseite (31) des Schalters angeordnet ist, wobei das erste flexible Substrat (18) eine darauf ausgebildete erste Elektrode (14) aufweist und ausreichende Flexibilität hat, um in Abhängigkeit von einem darauf aufgebrachten Druck auslenkbar zu sein, wobei eine Anzeige durch das erste Substrat (18) hindurch sichtbar ist;
eine Flüssigkristalleinrichtung (11) enthaltend die Kombination eines Flüssigkristallmaterials und einer Umschließung zur Erzeugung einer verzerrten Ausrichtung des Flüssigkristallmaterials, welches in Abhängigkeit von dieser Ausrichtung Licht streut und/oder absorbiert und welches in Abhängigkeit von einem elektrischen Feld den Betrag der Streuung oder Absorption reduziert;
ein zweites flexibles Substrat (12), welches auf der Rückseite des ersten Substrats (18) angeordnet ist und eine zweite darauf ausgebildete Elektrode (13) aufweist und welches ausreichende Flexibilität hat, um in Abhängigkeit von der Aufbringung des Drucks auslenkbar zu sein, wobei die Flüssigkristalleinrichtung (11) zwischen dem ersten und zweiten Substrat (18, 12) angeordnet ist;
ein drittes Substrat (20), welches an der Rückseite des zweiten Substrates angeordnet ist und einen ersten darauf ausgebildeten Leiter (28) aufweist, wobei das dritte Substrat (20) Teil eines Schalters (8) bildet und einen flexiblen Teil zur Betätigung einer Schaltfunktion in Abhängigkeit von der Aufbringung des Drucks aufweist;
ein im wesentlichen starres Substrat (24), welches Teil des Schalters (8) bildet und an der Rückseite des dritten Substrates (20) an und im Abstand von diesem angeordnet ist, wobei das starre Substrat (20) einen zweiten darauf ausgebildeten Leiter aufweist;
wobei mindestens ein Teil des ersten, zweiten und dritten Substrates (18, 12, 20) zu dem starren Substrat (24) hin auslenkbar ist in Abhängigkeit von der Aufbringung des Druckes, um die Schaltfunktion zu betätigen und eine Änderung in der Anzeige zu bewirken;
wobei die Flüssigkristalleinrichtung (11) derart angeordnet ist, daß mindestens ein Teil des Druckes auf die Flüssigkristalleinrichtung (11) aufgebracht wird, welche durch die Aufbringung des Druckes im wesentlichen derart unbeeinflußt bleibt, daß sie ihre Fähigkeit zur Erzeugung der verzerrten Ausrichtung und zur Reduzierung des Betrages der Streuung oder Absorption während Aufbringung des Druckes beibehält;
**gekennzeichnet** durch Mittel (46), die eine Feuchtigkeitssperre zum Verhindern einer Kontamination der Flüssigkristalleinrichtung (11) durch das zweite Substrat hindurch bilden.

2. Schalter nach Anspruch 1,
**gekennzeichnet** durch eine Reflektoreinrichtung (26), die auf der von dem Leiter (28) abgewandten Seite des dritten Substrates (20) ausgebildet ist; wobei Mittel (52) einen Luftspalt zwischen der Reflektoreinrichtung (26) und der zweiten Elektrode (13) bilden.

3. Schalter nach Anspruch 2,
dadurch **gekennzeichnet,** daß die zweite Elektrode (13) ein Muster bildet und die Luftspaltmittel (32) ein Element mit darin ausgebildeten Ausschnitten umfaßt, die angenähert entsprechend dem Muster geformt sind.

4. Schalter nach Anspruch 2,
dadurch **gekennzeichnet,** daß die Mittel (46) zur Bildung der Sperre zwischen der Reflektoreinrichtung (26) und der zweiten Elektrode (13) angeordnet sind.

5. Schalter nach Anspruch 1 oder 2,
dadurch **gekennzeichnet,** daß das Flüssigkristallmaterial einen pleochroischen Farbstoff enthält.

6. Schalter nach Anspruch 2,
**gekennzeichnet** durch Mittel (42) zum Verringern der Menge des in die Flüssigkristalleinrichtung (11) eintretenden ultravioletten Lichtes.

7. Schalter nach Anspruch 1 oder 2,
**gekennzeichnet** durch ein Graphik-Overlay (40), welches an einer Frontseite des Schalters angeordnet ist.

8. Schalter nach Anspruch 1 oder 2,
**gekennzeichnet** durch ein viertes Substrat (22), das zwischen dem dritten Substrat (20) und dem starren Substrat (24) angeordnet ist, wobei das vierte Substrat (22) einen Teil des Schalters (8) bildet und auf ihm ein zweiter Leiter (32) ausgebildet ist, der einen elektrischen Kontakt mit dem ersten Leiter (28) während der Aufbringung des Druckes bildet.

9. Schalter nach Anspruch 8,
**gekennzeichnet** durch ein zwischen dem ersten und zweiten Leiter angeordnetes Mittel (34) zum Aufrechterhalten eines Abstandes zwischen diesen in Abwesenheit des Druckes.

10. Schalter nach Anspruch 8,
dadurch **gekennzeichnet,** daß das starre Substrat (24) als eine elektrostatische Entladungsabschirmung wirkt.

11. Schalter nach Anspruch 1 oder 2,
dadurch **gekennzeichnet,** daß ein transparentes leitfähiges Material auf das zweite Substrat (12) aufgebracht ist zur Bildung der zweiten Elektrode (13), und daß ein Metall auf das leitfähige Material aufgebracht ist zur Bildung mindestens einem Bus.

12. Schalter nach Anspruch 1,
**gekennzeichnet** durch eine Elektrolumineszenztafel (250) zur Bildung einer Quelle von Hintergrundbeleuchtung für die Anzeige, wobei die Elektrolumineszenztafel (250) zur Betätigung einer Schaltfunktion auslenkbar ist.

13. Schalter nach Anspruch 12,
**gekennzeichnet** durch ein im wesentlichen starres Substrat (224), welches an der Rückseite der Elektrolumineszenztafel (250) und im Abstand von dieser angeordnet ist, wobei die Elektrolumineszenztafel (25) einen ersten Leiter (228) aufweist, der auf ihrer dem starren Substrat (224) benachbarten Seite ausgebildet ist, und das starre Substrat (224) einen darauf ausgebildeten zweiten Leiter (232) aufweist.

14. Schalter nach Anspruch 13,
**gekennzeichnet** durch Mittel (236), die zwischen dem ersten und zweiten Leiter angeordnet sind, zum Aufrechterhalten eines Abstandes zwischen diesen in Abwesenheit des Druckes.

15. Schalter nach Anspruch 14,
**gekennzeichnet** durch eine Reflektoreinrichtung (224), die auf der von dem ersten Leiter (228) abgewandten Seite der Elektrolumineszenztafel (25) ausgebildet ist, und Mittel (252) zum Bilden des Luftspaltes zwischen der Reflektoreinrichtung (226) und dem Anzeigemittel (206).

16. Schalter nach Anspruch 1, 2 oder 12,
**gekennzeichnet** durch Mittel zum Liefern eines Tastgefühls während der Auslenkung der Substrate.

## Revendications

1. Commutateur comportant:
un premier substrat souple (18) positionné du côté d'observation (31) dudit commutateur, ledit premier substrat souple (18) ayant une première électrode (14) formée sur celui-ci et ayant une souplesse suffisante pour se déformer en réponse à l'application d'une pression sur celui-ci, un affichage étant visible à travers ledit premier substrat (18);
un moyen (11) à cristal liquide comportant la combinaison d'un cristal liquide et d'un moyen de rétention pour induire un alignement distordu dudit cristal liquide qui, en réponse à cet alignement, produit au moins l'une d'une diffusion et d'une absorption de lumière et qui, en réponse à un champ électrique, réduit la quantité de cette diffusion ou de cette absorption;
un deuxième substrat souple (12) positionné vers l'arrière dudit premier substrat (18), ayant une deuxième électrode (13) formée sur celui-ci, et ayant une souplesse suffisante pour se déformer en réponse à l'application de ladite pression, ledit moyen (11) à cristal liquide étant disposé entre lesdits premier et deuxième substrats (18, 12);
un troisième substrat (20) disposé vers l'arrière dudit deuxième substrat (12) et ayant un premier conducteur (28) formé sur celui-ci, ledit troisième substrat (20) faisant partie d'un commutateur (8) et incluant une partie souple servant à déclencher une fonction de commutation en réponse à l'application de ladite pression;
un substrat (24) sensiblement rigide faisant partie dudit commutateur (8) et disposé vers l'arrière dudit troisième substrat (20) et espacé de celui-ci, ledit substrat rigide (22) ayant un deuxième conducteur formé sur celui-ci;
au moins une partie desdits premier, deuxième et troisième substrats (18, 12, 20) étant déformable vers ledit substrat rigide (24) en réponse à l'application de ladite pression de façon à déclencher ladite fonction de commutation et à provoquer une modification dudit affichage;
ledit moyen (11) à cristal liquide étant agencé de façon qu'au moins une partie de ladite pression soit appliquée audit moyen (11) à cristal liquide qui n'est sensiblement pas affecté par l'application de ladite pression en ce sens qu'il conserve son aptitude à induire ledit alignement distordu et à réduire la quantité de cette diffusion ou de cette absorption pendant l'application de ladite pression;
caractérisé par un moyen (46) formant une barrière empêchant l'humidité de contaminer ledit moyen (11) à cristal liquide à travers le deuxième substrat.

2. Commutateur selon la revendication 1, caractérisé par un moyen réflecteur (26) formé sur le côté dudit troisième substrat (20) éloigné dudit conducteur (28);
un moyen (52) formant un interstice d'air entre ledit moyen réflecteur (26) et ladite deuxième électrode (13).

3. Commutateur selon la revendication 2, caractérisé en ce que ladite deuxième électrode (13) forme un motif et en ce que ledit moyen (52) à interstice d'air comprend un élément présentant des découpures formées dans celui-ci qui ont une forme proche de la configuration dudit motif.

4. Commutateur selon la revendication 2, caractérisé en ce que ledit moyen (46) formant barrière est disposé entre ledit moyen réflecteur (26) et ladite deuxième électrode (13).

5. Commutateur selon la revendication 1 ou la revendication 2, caractérisé en ce que ledit matériau à cristal liquide contient un colorant pléochroïque.

6. Commutateur selon la revendication 2, caractérisé par un moyen (42) pour réduire la quantité de lumière ultraviolette pénétrant dans ledit moyen (11) à cristal liquide.

7. Commutateur selon la revendication 1 ou la revendication 2, caractérisé par la superposition d'une image graphique (40) située sur une face avant du commutateur.

8. Commutateur selon la revendication 1 ou la revendication 2, caractérisé par un quatrième substrat (22) disposé entre ledit troisième substrat (20) et ledit substrat rigide (24), ledit quatrième substrat (22) faisant partie du commutateur (8) et ayant un deuxième conducteur (32) formé sur celui-ci pour établir un contact électrique avec ledit premier conducteur (28) pendant l'application de ladite pression.

9. Commutateur selon la revendication 8, caractérisé par un moyen (34) disposé entre lesdits premier et deuxième conducteurs pour maintenir un espacement entre ceux-ci en l'absence de ladite pression.

10. Commutateur selon la revendication 8, caractérisé en ce que ledit substrat rigide (24) joue le rôle de blindage contre les décharges électrostatiques.

11. Commutateur selon la revendication 1 ou la revendication 2, caractérisé en ce qu'un matériau conducteur transparent est appliqué sur ledit deuxième substrat (12) pour former ladite deuxième électrode (13) et en ce qu'un métal est appliqué audit matériau conducteur pour former au moins un bus.

12. Commutateur selon la revendication 1, caractérise par un panneau électroluminescent (250) pour fournir une source de rétro-éclairage pour ledit affichage, ledit panneau électroluminescent (250) étant déformable pour le déclenchement d'une fonction de commutation.

13. Commutateur selon la revendication 12, caractérisé par un substrat (224) sensiblement rigide formé vers l'arrière dudit panneau électroluminescent (250) et espacé de celui-ci, ledit panneau électroluminescent (250) ayant un premier conducteur (228) formé sur son côté le plus proche dudit substrat rigide (224) et ledit substrat rigide (224) ayant un deuxième conducteur (232) formé sur celui-ci.

14. Commutateur selon la revendication 13, caractérise par un moyen (236) disposé entre lesdits premier et deuxième conducteurs pour maintenir un espacement entre ceux-ci en l'absence de ladite pression.

15. Commutateur selon la revendication 14, caractérisé par un moyen réflecteur (226) formé sur le côté dudit panneau électroluminescent (250) qui est éloigné dudit premier conducteur (228) et un moyen (252) pour former un interstice d'air entre ledit moyen réflecteur (226) et ledit moyen d'affichage (206).

16. Commutateur selon la revendication 1, la revendication 2 ou la revendication 12, caractérisé par un moyen pour conférer une sensation tactile pendant la déformation desdits substrats.
